**Europäisches Patentamt**

**European Patent Office**

**Office européen des brevets**

(11) Veröffentlichungsnummer: **0 190 674**
**B1**

(12) **EUROPÄISCHE PATENTSCHRIFT**

(45) Veröffentlichungstag der Patentschrift:
**31.05.89**

(21) Anmeldenummer: **86101258.1**

(22) Anmeldetag: **31.01.86**

(51) Int. Cl.⁴: **B23K 7/04**

(54) Vorrichtung zum gesteuerten Brennschneiden und/oder Verbindungsschweissen von Werkstücken.

(30) Priorität: **04.02.85 DE 3503675**

(43) Veröffentlichungstag der Anmeldung:
**13.08.86 Patentblatt 86/33**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**AT-B- 259 982**
**DE-A- 1 950 459**
**DE-C- 2 641 851**
**FR-A- 1 161 251**
**US-A- 4 143 862**
**US-A- 4 222 795**

(73) Patentinhaber: **L. & C. Steinmüller GmbH,**
**Postfach 10 08 55/10 08 65 Fabrikstrasse 1,**
**D-5270 Gummersbach 1(DE)**

(72) Erfinder: **Thönes, Gustav, Eichendorffstrasse 36,**
**D-5270 Gummersbach 31(DE)**
Erfinder: **Roll, Paul, Am Stahlberg 16,**
**D-5270 Gummersbach 1(DE)**

(74) Vertreter: **Carstens, Wilhelm, Dipl.-Phys., L. & C.**
**Steinmüller GmbH Patentabteilung**
**Postfach 10 08 55/10 08 65, D-5270 Gummersbach 1(DE)**

## Beschreibung

Die Erfindung betrifft eine Vorrichtung zum gesteuerten Ausbrennen eines Loches in einem Werkstück mit gewölbter Oberfläche und Einschweißen eines zylindrischen zweiten Werkstückes in das Loch, mit einem Vorrichtungsgestell, einer im Vorrichtungsgestell positionierbaren und auf die Achse des zweiten Werkstückes ausrichtbaren Steuereinrichtung einschließlich eines sich senkrecht zur Achse des zweiten Werkstückes erstreckenden und um die Achse drehbaren Hebelarms, eines von dem Hebelarm getragenen und sich parallel zur Achse des zweiten Werkstücks erstreckenden Gerätehalters zur Aufnahme eines Brenn- oder Schweißgerätes an seinem untern Ende und eines mit dem Hebelarm verbundenen Abtastorgans, wobei das Brenn- oder Schweißgerät und das Abtastorgan zusammen parallel und senkrecht zur Achse einstellbar sind.

Aus der DE-A 1 950 459 ist eine Vorrichtung zum Schneiden oder Schweißen entlang der Durchdringungslinie zweier Zylinder bekannt, bei der eine Steuerkurve während des Schneidens und/oder Schweißens abgetastet wird und die Bewegung des Brenn- oder Schweißgeräts parallel zur Achse des zylindrischen zweiten Werkstücks steuert. Dabei wird eine ortsfeste Lehre von einem verschiebbaren Taster mechanisch abgetastet. Die Steuerkurve, die eine lineare Lehre darstellt, hat dieselbe Form wie die Durchdringungslinie zwischen den beiden Zylindern und wird vor dem Ausbrennen festgelegt und wird nach Festlegung gesondert gefertigt. Dies ist ein umständliches Verfahren.

Es ist die Aufgabe der vorliegenden Erfindung eine Vorrichtung der im Oberbegriff des Anspruches 1 genannten Art zu schaffen, bei der die Festlegung der Kontur und die Abtastung der Kontur auf einfache Weise erfolgen kann.

Diese Aufgabe wird dadurch gelöst, daß Brenn- oder Schweißgerät am unteren Ende des Gerätehalters durch das Abtastorgan austauschbar ist und daß am oberen Ende eine Befestigungseinrichtung für ein Aufzeichnungs- und/oder Leseelement angeordnet ist, wobei die Steuereinrichtung einen gegenüber dem Hebelarm drehstabilen, zylinderartigen Aufzeichnungsträger aufweist, der fest mit dem Gerätegestell verbunden ist, und daß der Hebelarm mittels eines Antriebs um die Achse des zweiten Werkstücks verschwenkbar ist und auf dem Hebelarm ein Antrieb und Führung für den Gerätehalter angebracht sind.

Bei Verwendung der Vorrichtung wird zunächst am unteren Ende des Gerätehalters das Abtastorgan angebracht und die Kontur des zu brennenden Loches auf dem ersten Werkstück abgetastet und auf dem Aufzeichnungsträger aufgezeichnet. Nach der so erfolgten Festlegung der auszubrennenden Kontur wird das Abtastorgan durch das Brenn- oder Schweißgerät ersetzt und danach die auf dem Aufzeichnungsträger aufgezeichnete Kontur durch ein Leseelement abgetastet, während gleichzeitig das Brenn- oder Schweißgerät in Tätigkeit ist. Auf diese Weise wird das Loch ausgebrannt. Danach wird unter Benutzung derselben Aufzeichnung das zylindrische zweite Werkstück in das zuvor gebrannte Loch eingeschweißt. Die erforderlichen Bewegungen während der Konturerfassung, des Einbrennens und des Einschweißens werden auf einfache Weise dadurch ermöglicht, daß der Hebelarm mittels des einen Antriebs um die Achse des zweiten Werkstückes verschwenkbar ist und auf dem Hebelarm weiterhin ein Antrieb und eine Führung für den Gerätehalter angebracht sind.

Es ist möglich, daß in der Befestigungseinrichtung als Aufzeichnungselement ein Schreiber und als Leseelement eine Fotozelle eingesetzt wird, wobei als Abtastorgan im Gerätehalter eine Abtastrolle zur Anwendung gelangt.

Es ist aber auch möglich, daß in der Befestigungseinrichtung als Aufzeichnungs- und Leseelement ein elektromagnetischer Schreib/Lesekopf eingesetzt wird, wobei als Abtastorgan im Gerätehalter ein entsprechender elektronischer Geber zur Anwendung gelangt.

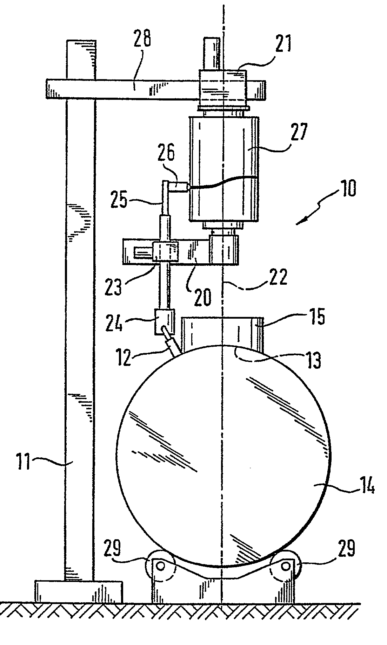

Weitere Einzelheiten, Merkmale und Vorteile der Erfindung ergeben sich aus der nachfolgenden Erläuterung einer in der Zeichnung schematisch dargestellten Vorrichtung.

Die in der Zeichnung dargestellte Steuereinrichtung 10 wird an einem Gestell 11 horizontal und vertikal verschiebbar angebracht, und dient dazu, ein Brenn- und/oder Schweißgerät 12, oder auch eine Schleifmaschine, zu halten und in einer vorgegebenen Art zu bewegen. Die Steuereinrichtung 10 besteht aus einem Hebelarm 20, welcher mittels eines drehzahlgeregelten Antriebsmotors und Getriebes 21 um die Mittelachse 22 des Stutzens 15 gedreht wird. Auf diesem Hebelarm 20 sind Antrieb und Führung 23 des Gerätehalters 24 angebracht. Der Abstand des Gerätehalters 24 zur Oberfläche des Behälters 14 im Bereich des Stutzenloches 13 wird während des gesamten Umlaufes des Hebelarms 20 konstant gehalten.

Zur Benutzung der Steuereinrichtung 10 wird zunächst am Behälter 14 die Stutzenmittelachse 22 angezeichnet. Sodann wird die an dem transportablen Gestell 11 angeordnete Steuereinrichtung 10 an der Stutzenmittelachse 22 auf geeignete Weise zentriert. Mittels einer Abtastrolle (nicht dargestellt), die statt des Brenn- und/oder Schweißgerätes 12 im Gerätehalter 24 befestigt wird, kann bei entriegelten Antrieben bzw. Stellmotoren 21 und 23 die Kontur des Behälters 14 auf dem Umfangskreis des später einzuschweißenden Stutzens 15 im Bereich der Stutzenöffnung 13 manuell abgefahren werden. Am oberen Ende 25 des Gerätehalters 24 ist eine Befestigungseinrichtung 26 für einen Schreiber oder zur Aufnahme eines Aufzeichnungselements angeordnet. Die Steuereinrichtung 10 weist ferner eine Trommel 27 auf, die fest mit dem Haltearm 28 verbunden ist, und die sich nicht mit dem Hebelarm 20 dreht. Auf dem Zylinder 27 ist eine Folie aufgespannt, auf der die Umfangslinie der Stutzenöffnung 13 gemäß der Wölbung des Behälters 14 graphisch oder elektromagnetisch aufgezeichnet wird.

Zum Ausbrennen des Stutzenloches 13 aus dem Behälter 14 wird statt des Schreibers eine nicht dargestellte Photozelle oder ein elektromagnetischer Lesekopf in die Befestigungseinrichtung 26 eingesetzt. Der Gerätehalter 24 wird mit einem Brennschneider 12 versehen. Die gewünschte Schneidgeschwindigkeit wird durch ein Einstellen der entsprechenden Drehzahl an der Antriebseinheit 21 erreicht. Das in der Befestigungseinrichtung 26 angebrachte Aufzeichnungs- und/oder Leseelement steuert den Antrieb 23 des Gerätehalters 24 und bewirkt über das Abfahren der vorher auf der Trommel 27 aufgezeichneten Linie die Konstanthaltung des Abstandes zwischen Behälter 14 und Schneidbrennr 12. Nachdem das Stutzenloch 13 ausgebrannt und beschliffen wurde, kann der Stutzen 15 in das Stutzenloch 13 eingeheftet werden. Zum Verschweißen des Stutzens 15 mit dem Behälter 14 im Bereich der Stutzenöffnung 13 wird in dem Gerätehalter 24 ein UP-Schweißkopf eingesetzt. Die gewünschte Schweißgeschwindigkeit wird wie beim vorstehend beschriebenen Brennschneiden an der Antriebseinheit 21 eingestellt. Nachdem der Stutzen 15 in das Stutzenloch 13 eingeschweißt wurde, kann an der Innenseite des Behälters 14 im Bereich der Stutzenöffnung 13 der Stutzen nach der auf der Trommel 27 aufgezeichneten Kurve abgetrennt werden.

Beispielsweise kann die Vorrichtung nicht nur zum Brennschneiden und/oder Schweißen in vertikaler (wie dargestellt), sondern auch in horizontaler Lage eingesetzt werden. Dies kann zum einen dadurch geschehen, daß der auf Rollen 29 drehbar gelagerte Behälter 14 gedreht wird; zum anderen kann aber auch das Gestell 11 in einem beliebigen Winkel, beispielsweise bis 90 Grad, verdrehbar gelagert sein.

## Patentansprüche

1. Vorrichtung zum gesteuerten Ausbrennen eines Loches (13) in einem Werkstück mit gewölbter Oberfläche und Einschweißen eines zylindrischen zweiten Werkstücks in das Loch, mit einem Vorrichtungsgestell (11), einer im Vorrichtungsgestell (11) positionierbaren und auf die Achse des zweiten Werkstückes (15) ausrichtbaren Steuereinrichtung (10) einschließlich eines sich senkrecht zur Achse (22) des zweiten Werkstückes (15) erstreckenden und um die Achse drehbaren Hebelarms (20), eines von dem Hebelarm getragenen und sich parallel zur Achse des zweiten Werkstückes erstreckenden Gerätehalters (24) zur Aufnahme eines Brenn- oder Schweißgerätes (12) an seinem unteren Ende und eines mit dem Hebelarm verbundenen Abtastorgans, wobei das Brenn- oder Schweißgerät und das Abtastorgan zusammen parallel und senkrecht zur Achse einstellbar sind, dadurch gekennzeichnet, daß das Brenn- oder Schweißgerät (12) am unteren Ende des Gerätehalters (24) durch das Abtastorgan austauschbar ist und daß am oberen Ende (25) eine Befestigungseinrichtung (26) für ein Aufzeichnungs- und/oder Leseelement angeordnet ist, wobei die Steuereinrichtung einen gegenüber dem Hebelarm (20) drehstabilen, zylinderartigen Aufzeichnungsträger (27) aufweist, der fest mit dem Gerätegestell verbunden ist, und daß der Hebelarm mittels eines Antriebs (21) um die Achse (22) des zweiten Werkstücks verschwenkbar ist und auf dem Hebelarm (20) ein Antrieb und Führung (23) für den Gerätehalter (24) angebracht sind.

2. Vorrichtung nach Anspruch 1, dadurch gekennzeichnet, daß in der Befestigungseinrichtung (26) als Aufzeichnungselement ein Schreiber und als Leseelement eine Fotozelle eingesetzt wird, wobei als Abtastorgan im Gerätehalter (24) eine Abtastrolle zur Anwendung gelangt.

3. Vorrichtung nach Anspruch 1, dadurch gekennzeichnet, daß in der Befestigungseinrichtung (26) als Aufzeichnungs- und Leseelement ein elektromagnetischer Schreib-/Lesekopf eingesetzt wird, wobei als Abtastorgan im Gerätehalter (24) ein entsprechender elektronischer Geber zur Anwendung gelangt.

## Revendications

1. Dispositif pour la découpe à chaud asservie d'un trou (13) dans une pièce à surface extérieure bombée et pour la fixation par soudage d'une deuxième pièce, cylindrique, dans ledit trou, dispositif comportant un châssis (11), un mécanisme de commande (10) qui est agencé de manière à pouvoir être positionné dans le châssis (11) du dispositif et centré sur l'axe de la deuxième pièce (15) et qui inclut un bras de levier (20), lequel s'étend orthogonalement par rapport à l'axe (22) de la deuxième pièce (15) et est mobile en rotation autour dudit axe, un porte-outil (24) porté par le bras de levier, lequel porte-outil s'étend parallèlement à l'axe de la deuxième pièce et est destiné à recevoir un outil de chauffage ou de soudage (12) à son extrémité inférieure, et un organe d'exploration relié au bras de levier, l'outil de chauffage ou de soudage et l'organe de lecture étant réglables en position conjointement, parallèlement et orthogonalement par rapport à l'axe, caractérisé en ce que l'outil de chauffage ou de soudage (12) est interchangeable avec l'outil d'exploration à l'extrémité inférieure du porte-outil (24), en ce que, à l'extrémité supérieure (25), il est disposé un dispositif de fixation (26) pour un moyen d'indication et/ou de lecture, le mécanisme de commande comprenant un support d'indication (27) cylindrique qui est immobile en rotation devant le bras de levier (20) et qui est fixé au châssis du dispositif, et en ce que le bras de levier est oscillant autour de l'axe (22) de la deuxième pièce à l'aide d'un moyen d'actionnement (21) et un moyen d'entraînement ainsi qu'un guide (23) destinés au porte-outil (24) sont montés sur le bras de levier (20).

2. Dispositif selon la revendication 1, caractérisé en ce que, comme moyen d'indication, un moyen à tracer et, comme moyen de lecture, une cellule photo-électrique sont placés dans le dispositif de fixation (26), un galet d'exploration étant appliqué en tant qu'organe d'exploration dans le porte-outil (24).

3. Dispositif selon la revendication 1, caractérisé en ce que, comme moyen d'indication et de lecture, une tête de traçage/lecture électromagnétique est placée dans le dispositif de fixation (26), un émetteur électronique approprié étant appliqué en tant qu'organe d'exploration dans le porte-outil (24).

**Claims**

1. Device for controlled burning-out of a hole (13) in a workpiece with a curved surface and welding-in of a cylindrical second workpiece into the hole, including a support (11), a control unit (10) that is displaceable mounted on said support and to be aligned onto the axis of said second workpiece (15), which control unit includes a lever arm (20) extending perpendicularly to the axis (22) of said second workpiece (15) and being rotatable about the axis, a tool carrier (24) for carrying a burning or welding tool (12) at its lower end which tool carrier is supported by said lever arm and extends in parallel to the axis of said second workpiece and including a sensing device connected to said lever arm, said burning or welding tool and said sensing device being adjustable together parallelly and perpendicularly to the axis, characterized in that said burning or welding tool (12) at the lower end of said tool carrier (24) is replaceable by said sensing device and in that at the upper end (25) an attachment device (26) for a recording and/or reading element is disposed, said control unit including a cylindrical recording carrier (27) non-rotatable with respect to the lever arm (20), which recording carrier is rigidly connected to said support (11), and in that said lever arm is rotatable about the axis (22) of said second workpiece by drive means (21) and in that on the lever arm (20) drive and guiding means (23) for said tool carrier (24) are mounted.

2. An apparatus according to claim 1, characterized in that in the attachment device (26) as a recording element a pen and as a reading element a photocell is used, a sensing roller being disposed in the carrier as a sensing device.

3. The apparatus according to claim 1, characterized in that in said attachment device (26) as a recording and reading element an electromagnetic recording/reading head is used, a corresponding electronic transmitter being disposed in said tool carrier as a sensing element.